# EUROPÄISCHE PATENTANMELDUNG

(11) **EP 3 628 880 A1**
(43) Veröffentlichungstag der Anmeldung: **01.04.2020**
(21) Anmeldenummer: 19199420.1
(22) Anmeldetag: 25.09.2019
(51) Int. Cl.: F16C 33/58, F16C 33/60, F16C 41/00

(54) **LAGERVORRICHTUNG**

(30) Priorität: 28.09.2018 DE 102018216810
(71) Anmelder: thyssenkrupp rothe erde Germany GmbH, 44137 Dortmund (DE); thyssenkrupp AG, 45143 Essen (DE)
(72) Erfinder: Voß, Bernd, 59556 Lippstadt (DE); Krug, Ulrich, 58093 Hagen (DE); Galster, Gerd, 44379 Dortmund (DE)
(74) Vertreter: thyssenkrupp Intellectual Property GmbH

(57) **Zusammenfassung**

Es wird eine Lagervorrichtung mit einem Lagerinnenteil, einem Lageraußenteil, einer ersten Verzahnung und einer zweiten Verzahnung vorgeschlagen, wobei die Verzahnungen relativ zueinander unbeweglich sind, die zweite Verzahnung eine im Vergleich zu der ersten Verzahnung unterschiedliche Zahngeometrie und/oder Verzahnungsqualität aufweist und/oder die Lageranordnung eine Messeinrichtung aufweist, wobei die zweite Verzahnung als Messverzahnung ausgebildet und mit der Messeinrichtung gekoppelt ist.

## Beschreibung

Die vorliegende Erfindung betrifft eine Lagervorrichtung gemäß dem Oberbegriff des Anspruchs 1.

Eine Lagervorrichtung im Sinne der vorliegenden Erfindung ist eine konstruktive Einrichtung, die zwei Bauteile beweglich, insbesondere drehbar, miteinander verbindet. Vorzugsweise weist eine Lagervorrichtung ein Lagerinnenteil bzw. einen Lagerinnenring und ein Lageraußenteil bzw. einen Lageraußenring auf, vorzugsweise wobei das Lagerinnenteil zumindest teilweise innerhalb des Lageraußenteils angeordnet bzw. in das Lageraußenteil eingesetzt ist und/oder das Lagerinnenteil und das Lageraußenteil relativ zueinander drehbar sind.

Vorzugseise weist eine Lagervorrichtung mehrere - insbesondere in einer Ebene angeordnete - Wälzkörper auf, insbesondere wobei das Lageraußenteil und das Lagerinnenteil über die Wälzkörper drehbar miteinander verbunden sind bzw. die Wälzkörper zwischen dem Lageraußenteil und dem Lagerinnenteil angeordnet sind.

Eine Lagervorrichtung im Sinne der vorliegenden Erfindung weist vorzugsweise mindestens ein Antriebsmittel auf, wobei das Lagerinnenteil oder das Lageraußenteil über das Antriebsmittel antreibbar ist. Besonders bevorzugt weist eine Lagervorrichtung im Sinne der vorliegenden Erfindung mindestens eine Verzahnung als Antriebsmittel auf, wobei das Lagerinnenteil oder das Lageraußenteil über die Verzahnung antreibbar ist, insbesondere mittels eines Ritzels. Lagervorrichtungen im Sinne der vorliegenden Erfindung können jedoch auch andere Antriebsmittel aufweisen, wie eine Riemenscheibe, ein Kettenrad oder ein Reibrad.

Vorzugsweise ist eine Lagervorrichtung im Sinne der vorliegenden Erfindung ein Wälzlager, insbesondere ein einreihiges oder mehrreihiges Großwälzlager und/oder Drahtwälzlager mit einer Außen- und/oder Innenverzahnung. Besonders bevorzugt ist eine Lagervorrichtung im Sinne der vorliegenden Erfindung als Radiallager und/oder Axiallager ausgebildet und/oder dazu ausgebildet, Radialkräfte, und/oderAxialkräfte und/oder Kippmomente aufzunehmen.

Der vorliegenden Erfindung liegt die Aufgabe zugrunde, eine verbesserte Lagervorrichtung anzugeben.

Die obige Aufgabe wird durch eine Lagervorrichtung gemäß Anspruch 1 gelöst. Vorteilhafte Weiterbildungen sind Gegenstand der Unteransprüche.

Die vorschlagsgemäße Lageranordnung, insbesondere das Lagerinnenteil bzw. das Lageraußenteil, weist vorzugsweise eine erste Verzahnung und eine zweite, von der ersten Verzahnung verschiedene und/oder axial beabstandete Verzahnung auf.

Ein Aspekt der vorliegenden Erfindung liegt darin, dass die erste Verzahnung und die zweite Verzahnung relativ zueinander unbeweglich bzw. starr bzw. fest miteinander verbunden sind.

Besonders bevorzugt sind beide Verzahnungen bzw. sowohl die erste Verzahnung als auch die zweite Verzahnung am Lagerinnenteil oder am Lageraußenteil angeordnet. Auf diese Weise kann die zweite Verzahnung als Messverzahnung verwendet werden bzw. mittels der zweiten Verzahnung die Winkellage/Drehstellung bzw. die Änderung der Winkellage/Drehstellung der ersten Verzahnung bzw. des Lagerinnenteils bzw. des Lageraußenteils erfasst bzw. bestimmt werden. Insbesondere ist die zweite Verzahnung mit einer Messeinrichtung, besonders bevorzugt einem Winkellagegeber, zum Erfassen bzw. Bestimmen der Winkellage/Drehstellung messtechnisch gekoppelt oder koppelbar.

Gemäß einem weiteren, auch unabhängig realisierbaren Aspekt der vorliegenden Erfindung weist die zweite Verzahnung eine im Vergleich zu der ersten Verzahnung unterschiedliche Zahngeometrie und/oder Verzahnungsqualität auf.

Unter dem Begriff "Zahngeometrie" im Sinne der vorliegenden Erfindung ist bzw. sind vorzugsweise die Geometrie bzw. die geometrischen Größen der ersten und zweiten Verzahnung zu verstehen.

Vorzugsweise handelt es sich bei der ersten und/oder zweiten Verzahnung um eine Stirnradverzahnung, insbesondere mit einer Geradverzahnung oder Schrägverzahnung, und/oder um eine Evolventenverzahnung. Es sind jedoch auch andere Verzahnungen möglich, beispielsweise in Form einer gradverzahnten oder schrägverzahnten Kegelradverzahnung.

Vorzugsweise wird die Geometrie der ersten bzw. zweiten Verzahnung u.a. bestimmt durch bzw. sind einige geometrische Größen der ersten bzw. zweiten Verzahnung:
die Zähnezahl z,
die Teilung p in [mm],
das Modul m in [mm],
der Teilkreisdurchmesser d in [mm,]
der Kopfkreisdurchmesser dk in [mm],
der Fußkreisdurchmesser df in [mm],
der Achsabstand a in [mm],
der Eingriffswinkel w in [°] und/oder
der Profilverschiebungsfaktor x.

Insbesondere ist die Zahngeometrie bzw. sind die geometrischen Größen der ersten bzw. zweiten Verzahnung nach DIN 867:1986-02 (Bezugsprofile für Evolventenverzahnungen an Stirnrädern für den allgemeinen Maschinenbau und den Schwermaschinenbau), DIN ISO 21771:2014-08 (Zahnräder - Zylinderräder und Zylinderradpaare mit Evolventenverzahnung - Begriffe und Geometrie), DIN 21772:2012-07 (Zahnräder - Zylinderräder und Zylinderradpaare mit Evolventenverzahnung - Definition der Abweichungen) und DIN 21773:2014-08 (Zahnräder - Zylinderräder und Zylinderradpaare mit Evolventenverzahnung - Prüfmaße für die Zahndicke) normiert bzw. zu bestimmen.

Vorzugsweise weist die zweite Verzahnung einen niedrigeren Modul m, eine größere Zähnezahl z, einen größeren Teilkreisdurchmesser d, einen größeren Kopfkreisdurchmesser dk und/oder einen niedrigeren Eingriffswinkel w als die erste Verzahnung auf. Besonders bevorzugt weist die zweite Verzahnung eine negative Profilverschiebung bzw. einen negativen Profilverschiebungsfaktor x und/oder die erste Verzahnung eine positive Profilverschiebung bzw. einen positiven Profilverschiebungsfaktor x auf.

Die Zahngeometrie der zweiten Verzahnung ist als Messverzahnung ausgebildet bzw. für eine Messung der Winkellage/Drehstellung angepasst. Insbesondere durch den niedrigeren Modul m bzw. die niedrigere Teilung p und/oder den größeren Teilkreisdurchmesser d bzw. Kopfkreisdurchmesser dk ist es möglich, mittels der zweiten Verzahnung die Winkellage/Drehstellung genauer als mit der ersten Verzahnung zu messen bzw. zu bestimmen.

Zusätzlich oder alternativ ist die Verzahnungsqualität der zweiten Verzahnung besser bzw. feiner als der ersten Verzahnung.

Unter dem Begriff "Verzahnungsqualität" ist vorzugsweise die Qualität bzw. Fertigungsgenauigkeit der ersten und/oder zweiten Verzahnung zu verstehen, die mit unterschiedlichen Fertigungsverfahren, insbesondere spanenden, urformenden und/oder umformenden Fertigungsverfahren, wie Honen, Schleifen, Schaben, Fräßen, Hobeln, Stoßen, Stanzen, Räumen, Pressen, Gießen, Sintern und Spritzen, erreicht werden kann. Besonders bevorzugt wird die Verzahnungsqualität nach DIN 3961:1978-08 (Toleranzen für Stirnradverzahnungen - Grundlagen) in 12 Stufen normiert bzw. unterteilt, wobei die Stufe 1 die höchste bzw. feinste Verzahnungsqualität und die Stufe 12 die niedrigste bzw. gröbste Verzahnungsqualität aufweist.

Vorzugsweise weist die erste Verzahnung eine Verzahnungsqualität - insbesondere gemäß DIN 3961:1978-08 - der Stufe 7 oder gröber, insbesondere der Stufe 8, und/oder die zweite Verzahnung eine Verzahnungsqualität der Stufe 7 oder feiner, insbesondere der Stufe 6, auf.

Ganz besonders bevorzugt sind/ist die erste Verzahnung und/oder die zweite Verzahnung durch spanende Verfahren, insbesondere Fräsen, Stoßen und/oder Schleifen, hergestellt.

Die zweite Verzahnung weist vorzugsweise eine niedrigere Rundlaufabweichung und/oder eine niedrigere arithmetische Mittenrauheit als die erste Verzahnung auf, insbesondere wobei die Rundlaufabweichung gemäß ISO 1101:2017-02 (Geometrische Produktspezifikation - Geometrische Tolerierung - Tolerierung von Form, Richtung, Ort und Lauf) und/oder die arithmetische Mittenrauheit gemäß DIN EN ISO 4287:2010-07 (Geometrische Produktspezifikation - Oberflächenbeschaffenheit: Tastschnittverfahren - Benennungen, Definitionen und Kenngrößen der Oberflächenbeschaffenheit) normiert bzw. bestimmt wird.

Durch die höhere bzw. feinere Verzahnungsqualität bzw. die niedrigere Rundlaufabweichung bzw. die niedrigere Mittenrauheit der zweiten Verzahnung im Vergleich zu der ersten Verzahnung ist eine besonders präzise bzw. genaue Messung der Winkellage bzw. Drehstellung der zweiten Verzahnung und - mittelbar bzw. mittels der zweiten Verzahnung - auch der ersten Verzahnung möglich. Insbesondere werden durch die feine bzw. hohe Verzahnungsqualität der zweiten Verzahnung etwaige Messfehler bzw. -abweichungen reduziert.

Es sind jedoch auch Lösungen möglich, bei denen die Verzahnungsqualität und/oder die Zahngeometrie der ersten Verzahnung und der zweiten Verzahnung identisch sind/ist.

Gemäß einem weiteren, auch unabhängig realisierbaren Aspekt der vorliegenden Erfindung weist die Lagervorrichtung eine Messeinrichtung, insbesondere einen Winkellagegeber, auf, wobei die zweite Verzahnung als Messverzahnung ausgebildet und mit der Messeinrichtung messtechnisch gekoppelt ist bzw. die Messeinrichtung antreibt. Insbesondere wird eine Lagervorrichtung mit integrierter Messung der Winkellage/Drehstellung der Verzahnungen bzw. des Lagerinnenteils oder Lageraußenteils vorgeschlagen. Auf diese Weise werden entsprechende Vorteile realisiert.

Die oben genannten Aspekte und Merkmale der vorliegenden Erfindung sowie die sich aus den Ansprüchen und der nachfolgenden Beschreibung ergebenden Aspekte und Merkmale der vorliegenden Erfindung können grundsätzlich unabhängig voneinander, aber auch in Kombination realisiert werden.

Weitere Aspekte, Vorteile, Merkmale und Eigenschaften der vorliegenden Erfindung ergeben sich aus den Ansprüchen und der nachfolgenden Beschreibung einer bevorzugten Ausführungsform anhand der Zeichnung. Es zeigt:
- Fig. 1: eine schematische Draufsicht auf eine vorschlagsgemäße Lagervorrichtung;
- Fig. 2: einen schematischen Schnitt der Lagervorrichtung gemäß Schnittlinie A-A der Fig. 1; und
- Fig. 3: einen schematischen Schnitt der Lagervorrichtung gemäß Schnittlinie B-B der Fig. 1.

In den teilweise nicht maßstabsgerechten, nur schematischen Figuren werden für gleiche, gleichartige oder ähnliche Bauteile und Komponenten dieselben Bezugszeichen verwendet, wobei entsprechende oder vergleichbare Eigenschaften und Vorteile erreicht werden können, auch wenn von einer wiederholten Beschreibung abgesehen wird.

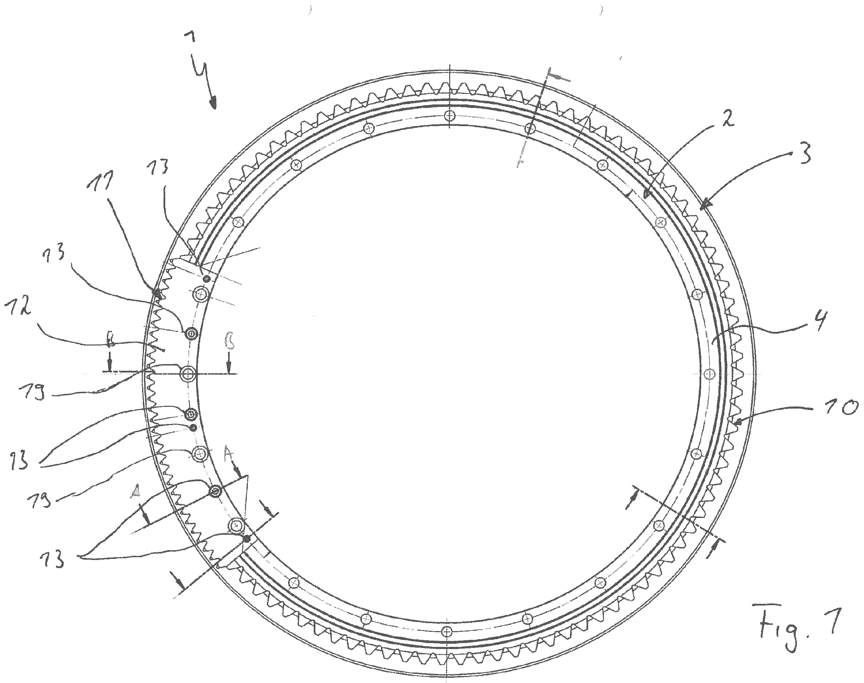

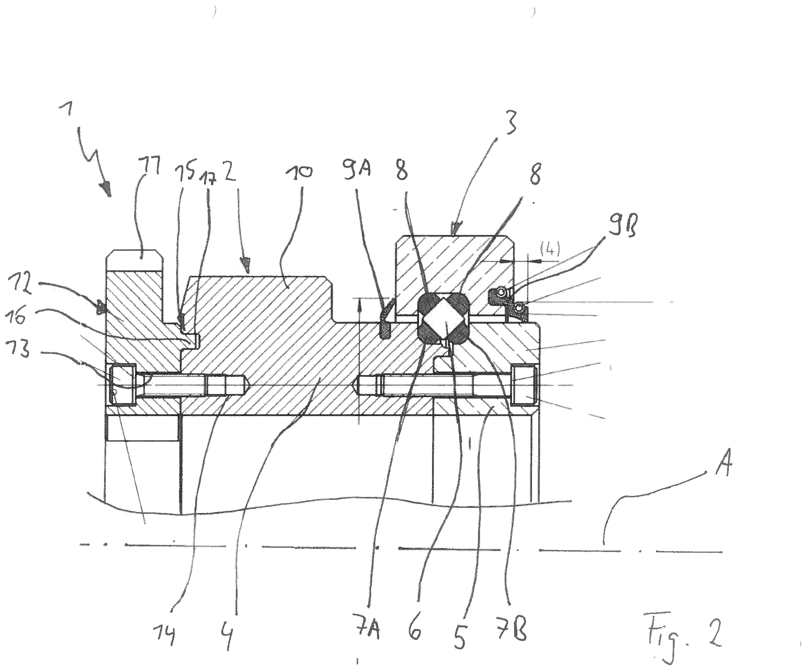

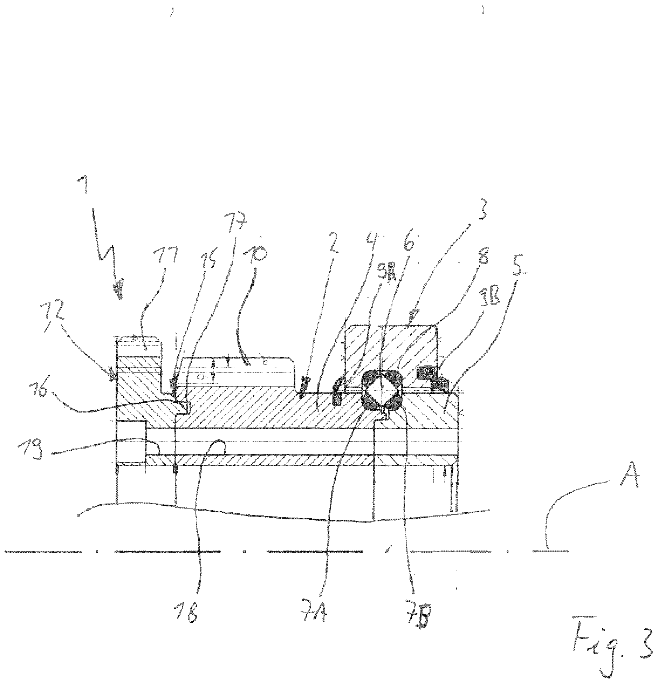

Fig. 1 zeigt eine perspektivische Darstellung einer vorschlagsgemäßen Lagervorrichtung 1. Fig. 2 und Fig. 3 zeigen unterschiedliche Schnittdarstellungen der Lagervorrichtung 1.

Die Lagervorrichtung 1 weist vorzugsweise ein Lagerinnenteil bzw. einen Lagerinnenring 2 und ein Lageraußenteil bzw. einen Lageraußenring 3 auf.

Vorzugsweise ist das Lagerinnenteil 2 relativ zum Lageraußenteil 3 bewegbar, insbesondere um die Achse A drehbar.

Das Lageraußenteil 3 und/oder das Lagerinnenteil 2 sind/ist vorzugsweise als Hohlkörper bzw. Ring ausgebildet. Vorzugsweise ist das Lageraußenteil 3 dazu ausgebildet, das Lagerinnenteil 2 zumindest teilweise aufzunehmen und/oder radial und/oder axial zu halten. Insbesondere weist das Lageraußenteil 3 eine runde, insbesondere zylinderförmige, Aufnahme auf, in die das Lagerinnenteil 2 zumindest teilweise eingesetzt ist.

Vorzugsweise ist das Lagerinnenteil 2 zumindest teilweise innerhalb des Lageraußenteils 3 angeordnet bzw. in das Lageraußenteil 3 eingesetzt. Bei der dargestellten Ausführungsform ist das Lagerinnenteil 2 länger als das Lageraußenteil 3 ausgebildet bzw. ragt das Lagerinnenteil 2 axial aus dem Lageraußenteil 3 hinaus, wie Fig. 2 und Fig. 3 veranschaulichen.

Das Lagerinnenteil 2 und/oder das Lageraußenteil 3 sind/ist einteilig oder mehrteilig ausgebildet. Bei der dargestellten Ausführungsform ist das Lagerinnenteil 2 mehrteilig und das Lageraußenteil 3 einteilig ausgebildet. Hier sind jedoch auch Lösungen möglich, bei denen das Lagerinnenteil 2 einteilig und/oder das Lageraußenteil 3 mehrteilig ausgebildet sind/ist. Insbesondere können/kann das Lagerinnenteil 2 und/oder das Lageraußenteil 3 in Umfangsrichtung segmentiert ausgebildet sein.

Vorzugsweise weist das Lagerinnenteil 2 einen Haltering 4 und einen Tragring 5 auf bzw. ist das Lagerinnenteil 2 durch einen Haltering 4 und einen Tragring 5 gebildet, insbesondere wobei der Haltering 4 und der Tragring 5 axial miteinander verbunden sind bzw. aneinander anliegen.

Wie insbesondere Fig. 2 veranschaulicht, sind der Haltering 4 und der Tragring 5 form-, kraft- und/oder stoffschlüssig, insbesondere durch Verschrauben und/oder Verstiften, miteinander verbunden.

Vorzugsweise ist durch den Tragring 5 bzw. die Befestigung des Tragrings 5 am Haltering 4 das Lageraußenteil 3 am Lagerinnenteil 2 befestigt bzw. axial fixiert.

Besonders bevorzugt weist die Lagervorrichtung 1 mehrere Wälzkörper 6 auf, vorzugsweise wobei die Wälzkörper 6 zwischen dem Lagerinnenteil 2, insbesondere dem Haltering 4 und dem Tragring 5, einerseits und dem Lageraußenteil 3 andererseits angeordnet sind und/oder das Lagerinnenteil 2, insbesondere der Haltering 4 und der Tragring 5, drehbar über die Wälzkörper 6 mit dem Lageraußenteil 3 verbunden ist bzw. sind.

Vorzugsweise sind die Wälzkörper 6 radial und/oder axial zwischen dem Lagerinnenteil 2, insbesondere dem Haltering 4 und dem Tragring 5, einerseits und dem Lageraußenteil 3 andererseits gehalten, insbesondere um Radialkräfte, und/oder Axialkräfte und/oder Kippmomente vom Lagerinnenteil 2 auf das Lageraußenteil 3 zu übertragen oder umgekehrt. Die dargestellte Lagervorrichtung 1 ist vorzugsweise sowohl zur Aufnahme von Radialkräften als auch Axialkräften, besonders bevorzugt auch von Kippmomenten, ausgebildet. Es sind jedoch auch Lösungen möglich, bei denen die Lagervorrichtung 1 als Radiallager oder Axiallager ausgebildet ist.

Die Wälzkörper 6 sind bei der dargestellten Ausführungsform als Zylinder bzw. Rollen ausgebildet und über zwei innere Laufringe 7 mit dem Lagerinnenteil 2 und über zwei äußere Laufringe 8 mit dem Lageraußenteil 3 verbunden sind. Insbesondere sind die Wälzkörper 6 über einen ersten inneren Laufring 7A mit bzw. an dem Haltering 4 und über einen zweiten inneren Laufring 7B mit bzw. an dem Tragring 5 verbunden bzw. abgestützt.

Bei der dargestellten Ausführungsform handelt sich folglich um ein Drahtkreuzrollenlager. Hier sind jedoch auch andere Lösungen bzw. Bauweisen möglich, insbesondere bei denen die Wälzkörper 6 als Kugeln ausgebildet sind und/oder unmittelbar bzw. direkt mit dem Lagerinnenteil 2 und dem Lageraußenteil 3 in Verbindung stehen. Insbesondere können/kann das Lagerinnenteil 2 und/oder das Lageraußenteil 3 oberflächengehärtet ausgebildet sein.

Um die Reibung und den Verschleiß der Lagervorrichtung 1 bzw. der Wälzkörper zu reduzieren, ist der Bereich zwischen dem Lagerinnenteil 2 und dem Lageraußenteil 3 vorzugsweise zumindest teilweise mit einem Schmiermittel (nicht dargestellt), wie Schmieröl oder Schmierfett, gefüllt bzw. versehen.

Vorzugsweise weist die Lagervorrichtung 1 mindestens eine - insbesondere umlaufende - Dichtung 9 auf, vorzugsweise wobei die Dichtung 9 die Lagervorrichtung 1 nach außen abdichtet und/oder ein Austreten des Schmiermittels aus dem Bereich zwischen dem Lagerinnenteil 2 und dem Lageraußenteil 3 verhindert oder zumindest reduziert.

Besonders bevorzugt weist die Lagervorrichtung 1 eine erste Dichtung 9A und eine zweite Dichtung 9B auf, vorzugsweise wobei die erste Dichtung 9A den Spalt zwischen dem Haltering 4 und dem Lageraußenteil 3 und/oder die zweite Dichtung 9B den Spalt zwischen dem Tragring 5 und dem Lageraußenteil 3 abdichtet. Insbesondere dichteten die Dichtungen 9A, 9B den Bereich zwischen dem Lagerinnenteil 2 und dem Lageraußenteil 3 axial und/oder radial in beide Richtungen ab.

Es sind jedoch auch Ausführungsformen möglich, bei denen die Lagervorrichtung 1 kein Schmiermittel und keine Dichtung aufweist.

Die Lagervorrichtung 1 weist vorzugsweise eine erste Verzahnung 10 und eine zweite Verzahnung 11 auf, vorzugsweise wobei die erste Verzahnung 10 und/oder die zweite Verzahnung 11 als Innen- oder Außenverzahnung ausgebildet sind/ist. Bei der dargestellten Ausführungsform sind die erste Verzahnung 10 und die zweite Verzahnung 11 jeweils als Außenverzahnung ausgebildet. Es sind jedoch auch Lösungen möglich, bei denen die erste Verzahnung 10 und/oder die zweite Verzahnung 11 als Innenverzahnung ausgebildet sind/ist.

Die erste Verzahnung 10 und die zweite Verzahnung 11 sind fest bzw. starr bzw. unbeweglich miteinander verbunden.

Vorzugsweise sind die erste Verzahnung 10 und die zweite Verzahnung 11 dem Lagerinnenteil 2 oder dem Lageraußenteil 3 zugeordnet bzw. fest mit dem Lagerinnenteil 2 oder dem Lageraußenteil 3 verbunden. Bei der dargestellten Ausführungsform sind die Verzahnungen 10, 11 dem Lagerinnenteil 2 zugeordnet. Es sind jedoch auch Lösungen möglich, bei denen die Verzahnungen 10, 11 dem Lageraußenteil 3 zugeordnet sind.

Vorzugsweise ist die Lagervorrichtung 1, insbesondere das Lagerinnenteil 2 bzw. das Lageraußenteil 3, durch bzw. über die erste Verzahnung 10 antreibbar, beispielsweise mittels eines angetriebenen Ritzels (nicht dargestellt), insbesondere derart, dass das Lagerinnenteil 2 relativ zum Lageraußenteil 3 gedreht wird.

Die erste Verzahnung 10 ist vorzugsweise einstückig mit dem Lagerinnenteil 2, insbesondere dem Haltering 4, ausgebildet. Insbesondere ist die erste Verzahnung 10 in das Lagerinnenteil 2, besonders bevorzugt den Haltering 4, integriert bzw. eingearbeitet. Es sind jedoch auch Lösungen möglich, bei denen die erste Verzahnung 10 durch ein separates bzw. abnehmbares Bauteil, wie einen abnehmbaren Zahnkranz, gebildet ist.

Wie Fig. 1 veranschaulicht, ist die erste Verzahnung 10 vorzugsweise ringförmig ausgebildet und/oder erstreckt sich die erste Verzahnung 10 vorzugsweise über den gesamten Umfang um die Lagervorrichtung 1, insbesondere das Lagerinnenteil 2 bzw. den Haltering 4. Es sind jedoch auch Lösungen möglich, bei denen sich die erste Verzahnung 10 nur partiell über den Umfang der Lagervorrichtung 1 erstreckt. Insbesondere kann die erste Verzahnung 10 durch ein Zahnkranzsegment gebildet sein.

Die zweite Verzahnung 11 ist vorzugsweise axial zu der ersten Verzahnung 10 benachbart und/oder axial von der ersten Verzahnung 10 beabstandet.

Vorzugsweise ist die zweite Verzahnung 11 durch ein separates Bauteil bzw. ein Zahnelement 12 gebildet. Insbesondere weist die Lagervorrichtung 1 ein Zahnelement 12 auf, vorzugsweise wobei das Zahnelement 12 die zweite Verzahnung 11 aufweist oder bildet.

Vorzugsweise ist das Zahnelement 12 lösbar bzw. form- und/oder kraftschlüssig, insbesondere durch Verstiften und/oder Verschrauben, mit dem Lagerinnenteil 2, insbesondere dem Haltering 4, oder dem Lageraußenteil 3 verbunden. Insbesondere ist das Zahnelement 12 austauschbar bzw. vom Lagerinnenteil 2, insbesondere dem Haltering 4, oder dem Lageraußenteil 3 abnehmbar.

Vorzugsweise ist das Zahnelement 12 unmittelbar mit dem Lagerinnenteil 2, insbesondere dem Haltering 4, bzw. dem Lageraußenteil 3 verbunden. Es sind jedoch auch konstruktive Lösungen möglich, bei denen das Zahnelement 12 mittelbar bzw. über weitere Bauteile mit dem Lagerinnenteil 2 bzw. dem Lageraußenteil 3 verbunden oder verbindbar ist.

Vorzugsweise erstreckt sich die zweite Verzahnung 11 nur über einen Teil des Umfangs oder über den gesamten Umfang der Lagervorrichtung 1.

Wie insbesondere Fig. 1 veranschaulicht, ist das Zahnelement 12 bei der dargestellten Ausführungsform vorzugsweise als Kreisringsegment bzw. Zahnkranzsegment ausgebildet, insbesondere mit einem Gradmaß von mehr als 30° oder 40° und/oder weniger als 180° oder 120°, insbesondere von zumindest im Wesentlichen 65°. Es sind jedoch auch Lösungen möglich, bei denen das Zahnelement 12 als Zahnkranz ausgebildet ist bzw. sich das Zahnelement 12 über den gesamten Umfang der Lagervorrichtung 1 erstreckt bzw. ein Gradmaß von bis zu 360° aufweist.

Wie bereits erläutert, ist das Zahnelement 12 vorzugsweise form- und/oder kraftschlüssig, insbesondere durch Verstiften und/oder Verschrauben mit dem Lagerinnenteil 2, insbesondere dem Haltering 4, bzw. dem Lageraußenteil 3 verbunden.

Besonders bevorzugt weist das Zahnelement 12 mehrere, hier sechs, Bohrungen 13 auf, um das Zahnelement 12 am Lagerinnenteil 2 bzw. Lageraußenteil 3, insbesondere am Haltering 4, zu befestigten.

Vorzugsweise weist das Lagerinnenteil 2, insbesondere der Haltering 4, mehrere, zu den Bohrungen 13 korrespondierende Bohrungen 14 auf, um das Zahnelement 12 und das Lagerinnenteil 2 zu verschrauben und/oder zu verstiften, wie Fig. 2 veranschaulicht.

Besonders bevorzugt ist das Zahnelement 12 axial mit dem Lagerinnenteil 2, insbesondere dem Haltering 4, bzw. dem Lageraußenteil 3 verbunden, insbesondere verschraubt bzw. verstiftet. Es sind jedoch auch Lösungen möglich, bei denen das Zahnelement 12 zusätzlich der alternativ radial bzw. seitlich bzw. quer zur Achse A mit dem Lagerinnenteil 2, insbesondere dem Haltering 4, bzw. dem Lageraußenteil 3 verbunden oder verbindbar, insbesondere verschraubt oder verschraubbar bzw. verstiftet oder verstiftbar, ist.

Vorzugsweise ist die zweite Verzahnung 11 bzw. das Zahnelement 12 relativ zum Lagerinnenteil 2, insbesondere Haltering 4, bzw. Lageraußenteil 3 bzw. zu der ersten Verzahnung 10 zentriert, besonders bevorzugt doppeltzentriert.

Vorzugsweise weist die Lagervorrichtung 1 eine Zentrierung 15 für das Zahnelement 12 auf, insbesondere um das Zahnelement 12 bzw. die zweite Verzahnung 11 radial bzw. relativ zum Lagerinnenteil 2 bzw. koaxial zur Achse A zu zentrieren bzw. auszurichten.

Vorzugsweise ist das Zahnelement 12 zumindest teilweise - insbesondere axial - in das Lagerinnenteil 2, insbesondere den Haltering 4, eingesteckt oder umgekehrt.

Bei der dargestellten Ausführungsform weist das Zahnelement 12 einen Vorsprung 16 und das Lagerinnenteil 2 bzw. der Haltering 4 eine zum Vorsprung 16 korrespondierende Vertiefung 17 auf, vorzugsweise wobei der Vorsprung 16 zumindest teilweise in die Vertiefung 17 eingesetzt bzw. eingesteckt ist. Es sind jedoch auch Lösungen möglich, beiden das Lagerinnenteil 2 bzw. der Halterring 4 den oder einen weiteren Vorsprung und das Zahnelement 12 die oder eine weitere Vertiefung aufweist.

Der Vorsprung 16 ist vorzugsweise länglich ausgebildet. Besonders bevorzugt erstreckt sich der Vorsprung 16 über die gesamte Länge des Zahnelements 12. Es sind jedoch auch andere Lösungen möglich, insbesondere bei denen das Zahnelement 12 mehrere, insbesondere segmentartige und/oder zueinander beabstandete, Vorsprünge aufweist.

Vorzugsweise ist die Vertiefung 17 entsprechend länglich bzw. als Nut ausgebildet. Besonders bevorzugt ist die Vertiefung 17 ringförmig ausgebildet und/oder erstreckt sich die Vertiefung 17 unterbrechungsfrei bzw. kontinuierlich über dem gesamten Umfang des Lagerinnenteils 2 bzw. des Halterings 4, wie insbesondere Fig. 1 veranschaulicht. Es sind jedoch auch Lösungen möglich, bei denen das Lagerinnenteil 2 bzw. der Haltering 4 mehrere, insbesondere zueinander beabstandete, Vertiefungen aufweist.

Vorzugsweise ragt der Vorsprung 16 axial bzw. parallel zur Achse A vom Zahnelement 12 hervor. Besonders bevorzugt ist die Vertiefung 17 entsprechend axial bzw. parallel zur Achse A in das Lagerinnenteil 2 bzw. den Haltering 4, insbesondere in eine axiale Stirnseite des Lagerinnenteils 2 bzw. des Halterings 4, eingearbeitet. Es sind jedoch auch Lösungen möglich, bei den der Vorsprung 16 radial bzw. quer zur Achse A vom Zahnelement 12, insbesondere nach innen, hervorragt und die Vertiefung 17 entsprechend radial bzw. quer zur Achse A in das Lagerinnenteil 2 bzw. den Haltering 4, insbesondere in die Mantelfläche des Lagerinnenteils 2 bzw. des Halterings 4, eingearbeitet ist.

Vorzugsweise ist das Zahnelement 12 mittels des Vorsprungs 16 und der Vertiefung 17, insbesondere durch Einstecken des Vorsprungs 16 in die Vertiefung 17, zentriert bzw. zentrierbar, besonders bevorzugt doppeltzentriert bzw. doppeltzentrierbar. Insbesondere ist die Zentrierung 15 als Doppeltzentrierung ausgebildet und/oder durch den Vorsprungs 16 und die Vertiefung 17 gebildet.

Wie bereits erläutert, ist das Zahnelement 12 vorzugsweise zusätzlich mit dem Lagerinnenteil 2 bzw. dem Lageraußenteil 3 verstiftet, insbesondere derart, dass das Zahnelement 12 (auch) durch Verstiften zentriert bzw. in Umfangsrichtung ausgerichtet ist.

Insbesondere ist das Zahnelement 12 mittels der Zentrierung 15 in radialer Richtung und durch zusätzliches Verstiften in Umfangsrichtung positioniert. Auf diese Weise wird eine besonders genaue Ausrichtung des Zahnelements 12 relativ zum Lagerinnenteil 2 bzw. Lageraußenteil 3 ermöglicht oder unterstützt.

Wie eingangs bereits erläutert, weisen die erste Verzahnung 10 und die zweite Verzahnung 11 eine unterschiedliche Zahngeometrie und/oder eine unterschiedliche Verzahnungsqualität auf.

Vorzugsweise weist die zweite Verzahnung 11 einen niedrigeren Modul m, eine größere Zähnezahl z, einen größeren Teilkreisdurchmesser d, einen größeren Kopfkreisdurchmesser dk und/oder einen niedrigeren Eingriffswinkel w als die erste Verzahnung 10 auf.

Besonders bevorzugt weist die erste Verzahnung 10 einen Modul m von mehr als 3 mm und/oder weniger als 10 mm, insbesondere von zumindest im Wesentlichen 5 mm, eine Zähnezahl z von mehr als 50 oder 70 und/oder weniger als 150 oder 120, insbesondere von 99, einen Teilkreisdurchmesser d von mehr als 300 mm oder 400 mm und/oder weniger als 600 mm oder 550 mm, insbesondere von zumindest im Wesentlichen 495 mm, einen Kopfkreisdurchmesser dk von mehr als 400 mm und/oder weniger als 600 mm, insbesondere von zumindest im Wesentlichen 505 mm, einen Profilverschiebungsfaktor x von mehr als 0 oder 1 und/oder weniger als 5 oder 4, insbesondere von zumindest im Wesentlichen 3, und/oder einen Eingriffswinkel w von mehr als 20° und/oder weniger 30°, insbesondere von zumindest im Wesentlichen 25°, auf.

Vorzugsweise weist die zweite Verzahnung 11 einen Modul m von mehr als 1 mm und/oder weniger als 5 mm, insbesondere von zumindest im Wesentlichen 3 mm, eine Zähnezahl z von mehr als 100 oder 150 und/oder weniger als 250 oder 200, insbesondere von 172, einen Teilkreisdurchmesser d von mehr als 400 mm oder 450 mm und/oder weniger als 600 mm oder 550 mm, insbesondere von zumindest im Wesentlichen 516 mm, einen Kopfkreisdurchmesser dk von mehr als 450 mm und/oder weniger als 600 mm, insbesondere von zumindest im Wesentlichen 519 mm, einen Profilverschiebungsfaktor x von weniger als 0 oder -10 und/oder mehr als -60 oder -50, insbesondere von zumindest im Wesentlichen -45, und/oder einen Eingriffswinkel w von mehr als 10° und/oder weniger 30°, insbesondere von zumindest im Wesentlichen 20°, auf.

Vorzugsweise weist die erste Verzahnung 10 eine Verzahnungsqualität der Stufe 7 oder gröber, insbesondere der Stufe 8, und die zweite Verzahnung 11 eine Verzahnungsqualität der Stufe 7 oder feiner, insbesondere der Stufe 6, auf.

Vorzugsweise weist die erste Verzahnung 10 eine Rundlaufabweichung von mehr als 0,05 mm oder 0,08 mm und/oder weniger als 0,20 mm oder 0,15 mm, insbesondere von zumindest im Wesentlichen 0,11 mm, und/oder eine arithmetische Mittenrauheit von mehr als 15 µm oder 20 µm und/oder von weniger als 50 µm oder 40 µm, insbesondere von zumindest im Wesentlichen 33 µm, auf.

Vorzugsweise weist die zweite Verzahnung 11 eine Rundlaufabweichung von mehr als 0,02 mm oder 0,04 mm und/oder weniger als 0,15 mm oder 0,10 mm, insbesondere von zumindest im Wesentlichen 0,07 mm, und/oder eine arithmetische Mittenrauheit von mehr als 5 µm oder 10 µm und/oder von weniger als 30 µm oder 20 µm, insbesondere von zumindest im Wesentlichen 15 µm, auf.

Die Lagervorrichtung 1 ist bzw. das Lagerinnenteil 2 und das Lageraußenteil 3 sind vorzugsweise (jeweils) mit einem weiteren Bauteil (nicht dargestellt) form-, kraft- und/oder stoffschlüssig, insbesondere durch Verschrauben, verbunden oder verbindbar. Insbesondere weisen/weist das Lagerinnenteil 2 und/oder das Lageraußenteil 3 ein oder mehrere Verbindungsmittel, wie Bohrungen o. dgl., auf, um ein Verbinden mit weiteren Bauteilen zu ermöglichen.

Wie insbesondere Fig. 3 veranschaulicht, weist die Lagervorrichtung 1, insbesondere das Lagerinnenteil 2, mehrere Bohrungen 18 zur Befestigung von Bauteilen, insbesondere einer Anschlusskonstruktion, auf, vorzugsweise wobei die Bohrungen 18 als Durchgangsbohrungen ausgebildet sind und/oder sich durch den Haltering 4 und den Tragring 5 erstrecken. Vorzugsweise ist das Zahnelement 12 mit zu den Bohrungen 18 korrespondierenden Bohrungen 19 versehen. Es sind insbesondere auch konstruktive Lösungen möglich, bei denen die Bohrungen 18 nicht als Durchgangsbohrungen ausgebildet sind bzw. das Zahnelement 12 keine zu den Bohrungen 18 korrespondierenden Bohrungen 19 aufweist. Beispielsweise können die Bohrungen 18 als Gewindesacklöcher ausgebildet sein.

Zusätzlich oder alternativ kann das Lageraußenteil 3 Bohrungen zur Befestigung von weiteren Bauteilen aufweisen.

Wie eingangs bereits erläutert, ist die zweite Verzahnung 11 als Messverzahnung ausgebildet und mit einer Messeinrichtung (nicht dargestellt), insbesondere einem Winkellagegeber bzw. einem Drehgeber, wie einem Inkrementalgeber oder Absolutwertgeber, messtechnisch gekoppelt oder koppelbar, vorzugsweise um den Drehwinkel bzw. die Winkellage und/oder die Drehwinkeländerung bzw. die Winkeländerung der zweiten Verzahnung 11 bzw. des Zahnelements 12, der ersten Verzahnung 10 bzw. des Lagerinnenteils 2 bzw. des Lageraußenteils 3 zu messen und/oder zu bestimmen.

Vorzugsweise ist die Messeinrichtung mechanisch, (elektro-)magnetisch, optisch, induktiv und/oder kapazitiv mit der zweiten Verzahnung 11 bzw. dem Zahnelement 12 gekoppelt, insbesondere um den Drehwinkel bzw. die Winkellage und/oder die Drehwinkeländerung bzw. die Winkeländerungen zu messen bzw. zu bestimmen.

Gemäß einer besonders bevorzugten Ausführungsform (nicht dargestellt) weist die Lagervorrichtung 1 eine derartige Messeinrichtung auf bzw. ist eine derartige Messeinrichtung in die Lagervorrichtung 1 integriert.

Vorzugsweise sind einzelne, einige oder alle Bauteile der Lagervorrichtung 1, insbesondere die erste Verzahnung 10 und/oder die zweite Verzahnung 11, aus Metall, insbesondere Aluminium oder Stahl, hergestellt.

Insbesondere sind auch Ausführungsformen möglich, bei denen die erste Verzahnung 10 und die zweite Verzahnung 11 aus unterschiedlichen Materialien hergestellt sind.

Vorzugsweise sind einzelne, einige oder alle Bauteile der Lagervorrichtung 1, insbesondere die erste Verzahnung 10 und/oder die zweite Verzahnung 11, gehärtet, insbesondere randschichtgehärtet und/oder nitriert, vergütet und/oder beschichtet.

### Bezugszeichenliste:

- 1: Lagervorrichtung
- 2: Lagerinnenteil
- 3: Lageraußenteil
- 4: Haltering
- 5: Tragring
- 6: Wälzkörper
- 7: innerer Laufring
- 7A: erster innerer Laufring
- 7B: zweiter innerer Laufring
- 8: äußerer Laufring
- 9: Dichtung
- 9A: erste Dichtung
- 9B: zweite Dichtung
- 10: erste Verzahnung
- 11: zweite Verzahnung
- 12: Zahnelement
- 13: Bohrung (Zahnelement)
- 14: Bohrung (Lagerinnenteil)
- 15: Zentrierung
- 16: Vorsprung
- 17: Vertiefung
- 18: Bohrung (Lagerinnenteil)
- 19: Bohrung (Zahnelement)

- A: Achse

## Patentansprüche

1. Lagervorrichtung (1) mit einem Lagerinnenteil (2) und einem Lageraußenteil (3),
wobei das Lagerinnenteil (2) und das Lageraußenteil (3) relativ zueinander drehbar sind,
wobei die Lagervorrichtung (1) eine erste Verzahnung (10) und eine zweite, von der ersten Verzahnung (10) verschiedene Verzahnung (11) aufweist,
**dadurch gekennzeichnet,**
**dass** die erste Verzahnung (10) und die zweite Verzahnung (11) relativ zueinander unbeweglich sind, und
**dass** die zweite Verzahnung (11) eine im Vergleich zu der ersten Verzahnung (10) unterschiedliche Zahngeometrie und/oder Verzahnungsqualität aufweist, und
**dass** die Lagervorrichtung (1) eine Messeinrichtung aufweist, wobei die zweite Verzahnung (11) als Messverzahnung ausgebildet und mit der Messeinrichtung gekoppelt ist.

2. Lagervorrichtung nach Anspruch 1, **dadurch gekennzeichnet, dass** sowohl die erste Verzahnung (10) als auch die zweite Verzahnung (11) am Lagerinnenteil (2) oder am Lageraußenteil (3) angeordnet und/oder als Außenverzahnung oder Innenverzahnung ausgebildet sind.

3. Lagervorrichtung nach Anspruch 1 oder 2, **dadurch gekennzeichnet, dass** die Lagervorrichtung (1), insbesondere das Lagerinnenteil (2) oder das Lageraußenteil (3), einen Zahnkranz aufweist, wobei der Zahnkranz die erste Verzahnung (10) aufweist oder bildet, und/oder dass die erste Verzahnung (10) sich über den gesamten Umfang der Lagervorrichtung (1), insbesondere des Lagerinnenteils (2) oder des Lageraußenteils (3), erstreckt.

4. Lagervorrichtung nach einem der voranstehenden Ansprüche, **dadurch gekennzeichnet, dass** die erste Verzahnung (10) bzw. der Zahnkranz einstückig mit dem Lagerinnenteil (2) oder dem Lageraußenteil (3) ausgebildet bzw. in das Lagerinnenteil (2) oder das Lageraußenteil (3) eingearbeitet ist.

5. Lagervorrichtung nach einem der voranstehenden Ansprüche, **dadurch gekennzeichnet, dass** die Lagervorrichtung (1) mindestens ein - insbesondere separates bzw. abnehmbares - Zahnelement (12) aufweist, wobei das Zahnelement (12) die zweite Verzahnung (11) aufweist oder bildet.

6. Lagervorrichtung nach Anspruch 5, **dadurch gekennzeichnet, dass** das Zahnelement (12) - insbesondere unmittelbar - an dem Lagerinnenteil (2) oder dem Lageraußenteil (3) befestigt, insbesondere angeschraubt, und/oder von dem Lagerinnenteil (2) bzw. dem Lageraußenteil (3) abnehmbar ist.

7. Lagervorrichtung nach Anspruch 5 oder 6, **dadurch gekennzeichnet, dass** das Zahnelement (12) als Zahnkranzsegment ausgebildet ist und/oder dass sich das Zahnelement (12) nur partiell über den Umfang der Lagervorrichtung (1) erstreckt.

8. Lagervorrichtung nach einem der Ansprüche 5 bis 7, **dadurch gekennzeichnet, dass** das Zahnelement (12) zumindest teilweise - insbesondere axial bzw. mittels eines Vorsprungs (16) - in das Lagerinnenteil (2) oder das Lageraußenteil (3) eingesteckt ist und/oder relativ zu dem Lagerinnenteil (2) bzw. dem Lageraußenteil (3), insbesondere der ersten Verzahnung (10), zentriert, insbesondere doppeltzentriert, ist, vorzugsweise durch mindestens einen Zylinderstift und einen - insbesondere axialen - Vorsprung (16).

9. Lagervorrichtung nach einem der voranstehenden Ansprüche, **dadurch gekennzeichnet, dass** die zweite Verzahnung (11) eine höhere bzw. feinere Verzahnungsqualität, eine niedrigere Rundlaufabweichung, eine niedrigere Mittenrauheit, einen niedrigeren Modul, eine größere Zähnezahl, einen größeren Teilkreisdurchmesser, einen größeren Kopfkreisdurchmesser und/oder einen niedrigeren Eingriffswinkel als die erste Verzahnung (10) aufweist.

10. Lagervorrichtung nach einem der voranstehenden Ansprüche, **dadurch gekennzeichnet, dass** die Messeinrichtung als Winkellagegeber ausgebildet ist und/oder dazu ausgebildet ist, die Winkellage bzw. die Änderung der Winkellage der zweiten Verzahnung (11) und/oder - insbesondere indirekt bzw. mittels der zweiten Verzahnung (11) - die Winkellage bzw. die Änderung der Winkellage der ersten Verzahnung (10) zu erfassen bzw. bestimmen.
